# EUROPEAN PATENT APPLICATION

(11) **EP 4 810 380 A1**
(43) Date of publication of application: **23.09.2026**
(21) Application number: 26165902.3
(22) Date of filing: 18.03.2026
(51) Int. Cl.: B64D 35/022, B64D 35/025, F01D 15/10

(54) **HYBRID-ELECTRIC DRIVETRAIN FOR AN AIRCRAFT PROPULSION SYSTEM**

(30) Priority: 18.03.2025 US 202519083079
(71) Applicant: Pratt & Whitney Canada Corp., Longueuil, Québec J4G 1A1 (CA)
(72) Inventor: CHATELOIS, Bruno, (01BE5) Longueuil, J4G 1A1 (CA); BRITO, Roberto, (01BE5) Longueuil, J4G 1A1 (CA); WEAVER, Paul, (01BE5) Longueuil, J4G 1A1 (CA)
(74) Representative: Dehns

(57) **Abstract**

A propulsion system (20) includes an engine (22), a drivetrain (26), and a propulsor (24). The engine (22) includes an engine output shaft (52). The drivetrain (26) is coupled with the engine output shaft (52). The drivetrain (26) includes a propulsor output shaft (60), a gear assembly (64), and an electric motor assembly (62). The gear assembly (64) includes a propulsor output gear (70) mounted on the propulsor output shaft (60). The electric motor assembly (62) includes a bevel gear assembly (92) and an electric motor (90). The bevel gear assembly (92) is rotatable about a second rotational axis (112). The bevel gear assembly (92) is engaged with the propulsor output gear (70). The electric motor (90) includes a rotor (96) rotatable about a third rotational axis (104). The third rotational axis (104) is oriented at an oblique angle relative to the second rotational axis (112). The rotor (96) is engaged with the bevel gear assembly (92). The propulsor (24) is interconnected with the propulsor output gear (70).

## Description

### TECHNICAL FIELD

This invention relates generally to hybrid-electric propulsion systems for aircraft and, more particularly, to a propulsion system drivetrain including one or more electric motors.

### BACKGROUND OF THE ART

Hybrid-electric propulsion systems for aircraft may typically include one or more electric motors configured to supplement or replace a propulsion system engine (e.g., a gas turbine engine, an intermittent combustion engine, etc.) output to one or more propulsors. Various hybrid-electric propulsion system configurations are known. While these known propulsion system configurations may be suitable for their intended purposes, there is always room in the art for improvement.

### SUMMARY

According to an aspect of the present invention, there is provided a propulsion system for an aircraft including an engine, a drivetrain, and a propulsor. The engine includes an engine output shaft. The drivetrain is coupled with the engine output shaft. The drivetrain includes a propulsor output shaft, a gear assembly, and an electric motor assembly. The gear assembly includes a propulsor output gear mounted on the propulsor output shaft. The propulsor output gear and the propulsor output shaft are rotatable about a first rotational axis. The electric motor assembly includes a bevel gear assembly and an electric motor. The bevel gear assembly is rotatable about a second rotational axis. The bevel gear assembly is engaged with the propulsor output gear. The electric motor includes a rotor rotatable about a third rotational axis. The third rotational axis is oriented at an oblique angle relative to the second rotational axis. The rotor includes an electric motor output shaft and an electric motor output gear mounted on the electric motor output shaft. The electric motor output gear is engaged with the bevel gear assembly. The propulsor is interconnected with the propulsor output gear by the propulsor output shaft.

Optionally, and in accordance with the above, the drivetrain may further include at least one reduction gear-shaft assembly, the at least one reduction gear-shaft assembly may be engaged with the propulsor output gear, and the at least one reduction gear-shaft assembly may be coupled with the engine output shaft.

Optionally, and in accordance with any of the above, the bevel gear assembly may include a bevel gear shaft, a first gear, and a second gear, the first gear and the second gear may be disposed on the bevel gear shaft, the first gear may be coupled with the electric motor output gear, and the second gear may be coupled with the propulsor output gear.

Optionally, and in accordance with any of the above, the first gear may be disposed axially between the propulsor output gear and the electric motor, relative to the first rotational axis.

Optionally, and in accordance with any of the above, the first gear may be disposed axially between the propulsor output gear and the propulsor, relative to the first rotational axis.

Optionally, and in accordance with any of the above, the oblique angle may be between five degrees and thirty degrees.

Optionally, and in accordance with any of the above, the drivetrain may include a gearbox housing, the gearbox housing may house the gear assembly, and the electric motor may be mounted on the gearbox housing.

Optionally, and in accordance with any of the above, the gearbox housing may form an oblique mounting surface orthogonal to the third rotational axis, and the electric motor may be mounted to the gearbox housing on the oblique mounting surface.

Optionally, and in accordance with any of the above, the electric motor may include an electric motor housing, the electric motor housing may extend between and to a proximal end and a distal end, the electric motor housing may be mounted on the gearbox housing at the proximal end, and the distal end may be disposed radially outward of the gearbox housing relative to the second rotational axis.

Optionally, and in accordance with any of the above, the electric motor may include an electric motor housing, the electric motor housing may extend between and to a proximal end and a distal end, the electric motor housing may be mounted on the gearbox housing at the proximal end, and the distal end may be disposed radially outward of the proximal end relative to the second rotational axis.

Optionally, and in accordance with any of the above, the second rotational axis may be parallel to the first rotational axis.

According to another aspect of the present invention, there is provided a propulsion system for an aircraft including an engine and a drivetrain. The engine includes an engine output shaft. The drivetrain is coupled with the engine output shaft. The drivetrain includes a drivetrain output shaft, a gear assembly, and an electric motor assembly. The gear assembly includes a drivetrain output gear mounted on the drivetrain output shaft. The drivetrain output gear and the drivetrain output shaft are rotatable about a first rotational axis. The electric motor assembly includes a bevel gear assembly and an electric motor. The bevel gear assembly is rotatable about a second rotational axis parallel to the first rotational axis. The bevel gear assembly is engaged with the drivetrain output gear. The electric motor includes a rotor rotatable about a third rotational axis. The third rotational axis is oriented at an oblique angle relative to the second rotational axis. The rotor includes an electric motor output shaft and an electric motor output gear mounted on the electric motor output shaft. The electric motor output gear is engaged with the bevel gear assembly.

Optionally, and in accordance with the above, the bevel gear assembly may include a bevel gear shaft, a first gear, and a second gear, the first gear and the second gear may be disposed on the bevel gear shaft, the first gear may be coupled with the electric motor output gear, and the second gear may be coupled with the drivetrain output gear.

Optionally, and in accordance with any of the above, the drivetrain may include a gearbox housing, the gearbox housing may house the gear assembly, and the electric motor may be mounted on the gearbox housing.

Optionally, and in accordance with any of the above, the gearbox housing may form an oblique mounting surface orthogonal to the third rotational axis, and the electric motor may be mounted to the gearbox housing on the oblique mounting surface.

Optionally, and in accordance with any of the above, the electric motor may include an electric motor housing, the electric motor housing may extend between and to a proximal end and a distal end, the electric motor housing may be mounted on the gearbox housing at the proximal end, and the distal end may be disposed radially outward of the gearbox housing relative to the second rotational axis.

Optionally, and in accordance with any of the above, the electric motor may include an electric motor housing, the electric motor housing may extend between and to a proximal end and a distal end, the electric motor housing may be mounted on the gearbox housing at the proximal end, and the distal end may be disposed radially outward of the proximal end relative to the second rotational axis.

According to another aspect of the present invention, there is provided a propulsion system for an aircraft including an engine, a drivetrain, and a propulsor. The engine includes an engine output shaft. The drivetrain is coupled with the engine output shaft. The drivetrain includes a propulsor output shaft, a gear box, and an electric motor assembly. The gear box includes a gear box housing and a gear assembly. The gear box housing includes a housing wall disposed between the engine and the gear assembly. The housing wall extends between and to an inner side and an outer side. The inner side faces the gear assembly. The gear assembly includes a propulsor output gear mounted on the propulsor output shaft. The propulsor output gear and the propulsor output shaft are rotatable about a first rotational axis. The electric motor assembly includes a bevel gear assembly and an electric motor. The bevel gear assembly is rotatable about a second rotational axis. The bevel gear assembly is engaged with the propulsor output gear. The electric motor is mounted on the outer side. The electric motor includes a rotor rotatable about a third rotational axis. The third rotational axis is oriented at an oblique angle relative to the second rotational axis. The rotor includes an electric motor output shaft and an electric motor output gear mounted on the electric motor output shaft. The electric motor shaft extends through the housing wall. The electric motor output gear is engaged with the bevel gear assembly. The propulsor is interconnected with the propulsor output gear by the propulsor output shaft.

Optionally, and in accordance with the above, the oblique angle may be between five degrees and thirty degrees.

Optionally, and in accordance with any of the above, the second rotational axis may be parallel to the first rotational axis.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### DESCRIPTION OF THE DRAWINGS

FIG. 1 illustrates an aircraft including a propulsion system, in accordance with one or more embodiments of the present disclosure.
FIG. 2 schematically illustrates a cutaway, side view of an aircraft propulsion system, in accordance with one or more embodiments of the present disclosure.
FIG. 3 illustrates a perspective view of a portion of a drivetrain of the aircraft propulsion system, in accordance with one or more embodiments of the present disclosure.
FIG. 4 illustrates a perspective view of a portion of a drivetrain of the aircraft propulsion system including an electric motor assembly, in accordance with one or more embodiments of the present disclosure.
FIG. 5 illustrates a perspective view of a portion of a drivetrain of the aircraft propulsion system including another electric motor assembly, in accordance with one or more embodiments of the present disclosure.

### DETAILED DESCRIPTION

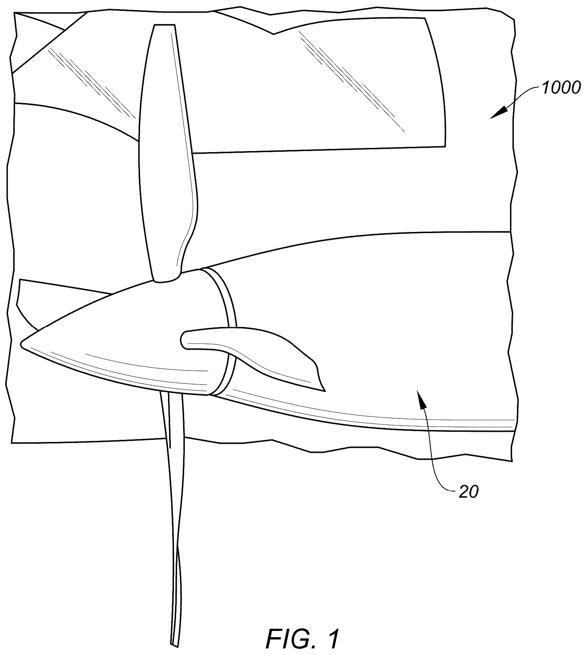

FIG. 1 illustrates an aircraft 1000 including at least one propulsion system 20. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

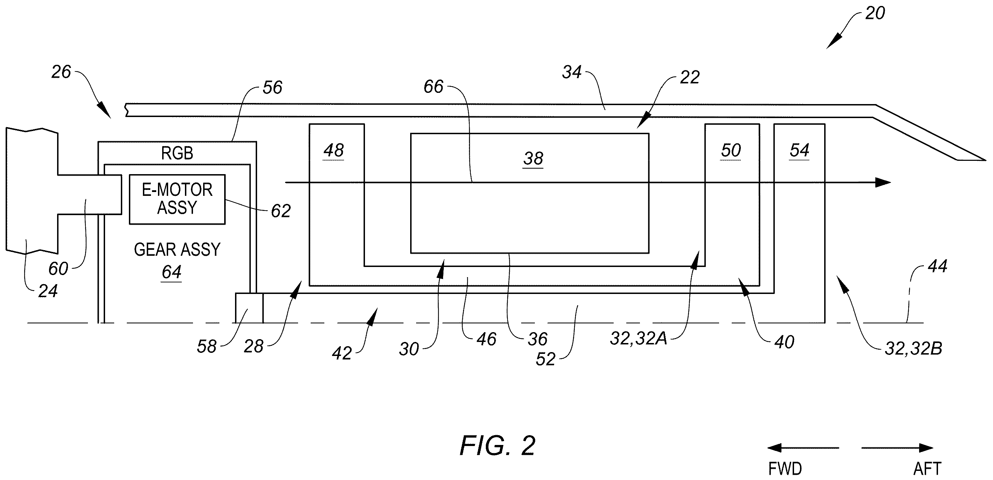

FIG. 2 schematically illustrates a cutaway, side view of the propulsion system 20. The propulsion system 20 of FIG. 2 includes an engine 22, a propulsor 24, and a drivetrain 26. The engine 22 of FIG. 2 is configured as a turboprop gas turbine engine. However, the present disclosure is not limited to any particular configuration of gas turbine engine for the propulsion system 20, and examples of gas turbine engine configurations for the propulsion system 20 may include, but are not limited to, a turbofan engine, a turbojet engine, a propfan engine, or the like. Aspects of the present disclosure may be equally applicable to aircraft propulsion systems including other engine configurations such as, but not limited to, rotary engines, piston engines, or other intermittent combustion engines.

The engine 22 of FIG. 2 includes a compressor section 28, a combustor section 30, a turbine section 32, and an engine static structure 34. The combustor section 30 includes a combustor 36 (e.g., an annular combustor) forming a combustion chamber 38. The turbine section 32 includes a high-pressure turbine 32A and a power turbine 32B.

Components of the compressor section 28 and/or the turbine section 32 of FIG. 2 form a first rotational assembly 40 (e.g., a high-pressure spool) and a second rotational assembly 42 of the engine 22. The first rotational assembly 40 and the second rotational assembly 42 are mounted for rotation about a rotational axis 44 (e.g., an axial centerline) of the engine 22 relative to the engine static structure 34.

The first rotational assembly 40 includes a first shaft 46, a bladed compressor rotor 48 for the compressor section 28, and a bladed first turbine rotor 50 for the high-pressure turbine 32A. The first shaft 46 interconnects the bladed compressor rotor 48 and the bladed first turbine rotor 50.

The second rotational assembly 42 of FIG. 2 includes a second shaft 52 (e.g., an engine output shaft) and a bladed second turbine rotor 54 for the power turbine 32B. The second shaft 52 is connected to the bladed second turbine rotor 54. The second shaft 52 is coupled with the propulsor 24 by the drivetrain 26.

The drivetrain 26 includes a gear box 56 (e.g., a reduction gear box (RGB)), an input shaft 58, an output shaft 60 (e.g., a propeller shaft), and an electric motor assembly 62. The gear box 56 includes and houses a gear assembly 64. The gear assembly 64 couples the input shaft 58 with the output shaft 60. For example, the gear assembly 64 may be a reduction gear assembly configured to drive rotation of the output shaft 60 at a reduced rotational speed relative to the input shaft 58. The input shaft 58 is coupled with (e.g., mounted on) the second shaft 52. The input shaft 58 interconnects the second shaft 52 with the gear assembly 64. The output shaft 60 is coupled with (e.g., mounted on) the propulsor 24. The output shaft 60 interconnects the propulsor 24 with the gear assembly 64. As will be discussed in further detail, the electric motor assembly 62 includes one or more electric motors coupled with the gear assembly 64.

The engine static structure 34 includes engine casings, cowlings, and other fixed (e.g., non-rotating) structures of the engine 22 which form, house, and/or support components of the engine 22 such as, but not limited to, those of the compressor section 28, the combustor section 30, and the turbine section 32. The engine static structure 34 may include one or more bearing assemblies configured to rotationally support components of the first rotational assembly 40 and the second rotational assembly 42.

During operation of the propulsion system 20 of FIG. 2, ambient air enters the propulsion system 20 (e.g., through an air intake) and is directed through the engine 22 along a core gas flow path 66. The ambient air flow along the core gas flow path 66 is compressed in the compressor section 28 by rotation of the bladed compressor rotor 48, and directed into the combustor 36 (e.g., the combustion chamber 38). Fuel is injected into the combustion chamber 38 and mixed with the compressed air to provide a fuel-air mixture. This fuel-air mixture is ignited, and combustion products thereof flow through the high-pressure turbine 32A and the power turbine 32B and are exhausted from the propulsion system 20. The bladed first turbine rotor 50 and the bladed second turbine rotor 54 rotationally drive the first rotational assembly 40 and the second rotational assembly 42, respectively, in response to the combustion gas flow through the high-pressure turbine 32A and the power turbine 32B along the core gas flow path 66. The second rotational assembly 42 (e.g., the second shaft 52) drives rotation of the propulsor 24 through the drivetrain 26. The electric motor(s) of the electric motor assembly 62 may be selectively operated to drive rotation of the propulsor 24 through the gear assembly 64 in combination with the second shaft 52. Additionally, the electric motor(s) of the electric motor assembly 62 may be driven by the drivetrain 26 to generate electrical power for one or more electrical systems of the propulsion system 20 and/or the aircraft 1000 (see FIG. 1).

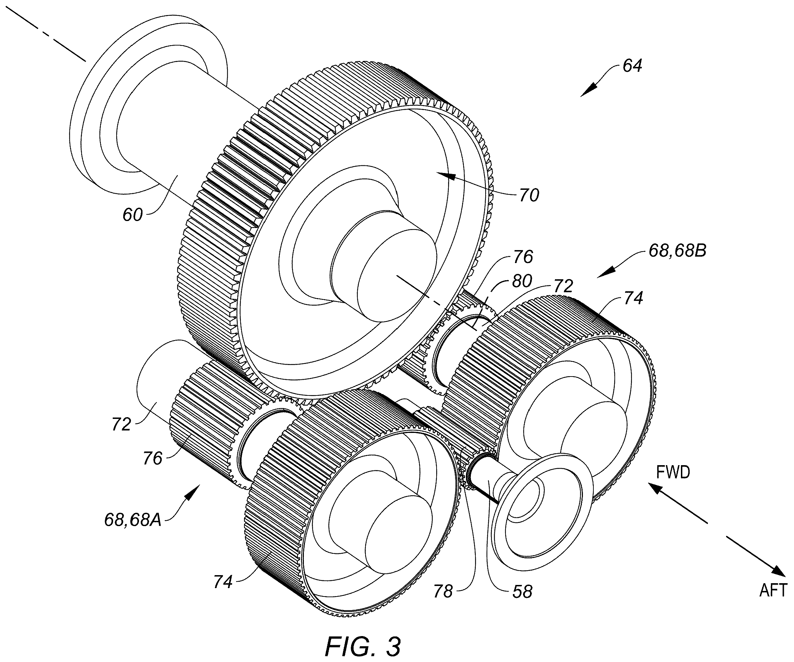

FIG. 3 illustrates a perspective view of a portion of the drivetrain 26 showing the input shaft 58, the output shaft 60, and the gear assembly 64. The gear assembly 64 includes at least one reduction gear-shaft assembly 68 and an output gear 70 (e.g., a propeller shaft drive gear) 72. The at least one reduction gear-shaft assembly 68 of FIG. 3 includes a first reduction gear-shaft assembly 68A and a second reduction gear-shaft assembly 68B. The reduction gear-shaft assemblies 68 each include a shaft 72, a first reduction gear 74, and a second reduction gear 76. The first reduction gear 74 and the second reduction gear 76 are mounted on the shaft 72. The first reduction gear 74 is engaged with (e.g., meshed with) an input gear 78 of the input shaft 58. The first reduction gear 74 may have a diameter which is greater than a diameter of the second reduction gear. The output gear 70 is mounted on or otherwise fixed to the output shaft 60. The output shaft 60 and the output gear 70 (e.g., and the propulsor 24) are rotatable together about a rotational axis 80. The rotational axis 80 is radially offset from the rotational axis 44 (see FIG. 2); however, the present disclosure is not limited to this foregoing exemplary configuration of the drivetrain 26. The rotational axis 80 may oriented parallel to or substantially parallel to the rotational axis 44 (see FIG. 2). The output gear 70 is engaged with (e.g., meshed with) the second reduction gear 76 of each of the reduction gear-shaft assemblies 68.

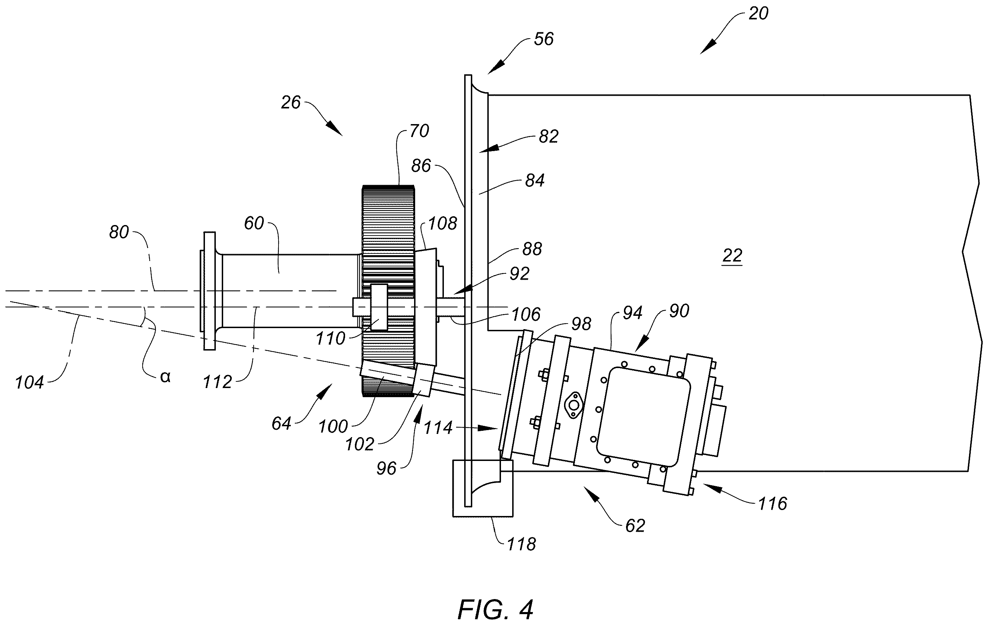

FIG. 4 illustrates portions of the drivetrain 26 including the gear box 56, the output shaft 60, the electric motor assembly 62, and the gear assembly 64. The gear box 56 includes a gear box housing 82. The gear box housing 82 houses and supports components of the electric motor assembly 62 and the gear assembly 64. The gear box housing 82 of FIG. 4 includes a housing wall 84 disposed between the engine 22 and the gear assembly 64 (e.g., relative to the rotational axis 80). The housing wall 84 extends (e.g., axially extends) between and to an inner side 86 of the housing wall 84 and an outer side 88 of the housing wall 84. The inner side 86 faces the gear assembly 64 and forms an interior cavity of the gear box 56. The outer side 88 is disposed opposite the inner side 86, for example, facing the engine 22.

The electric motor assembly 62 includes an electric motor 90 and a bevel gear assembly 92. The electric motor 90 includes a motor housing 94 and a rotor 96. The motor housing 94 extends (e.g., along the rotational axis 104 between and to a proximal end 114 of the motor housing 94 and a distal end 116 of the motor housing 94. The motor housing 94 is mounted on the gear box housing 82 at the proximal end 114. The motor housing 94 may be mounted on the housing wall 84 at the outer side 88 as shown in FIG. 4. The housing wall 84 may form an oblique mounting surface 98 (e.g., a flange) on the outer side 88. The oblique mounting surface 98 may be oriented obliquely relative to the rotational axis 80, for example, extending axially aftward (e.g., toward the engine 22) in an outer to inner radial direction. The motor housing 94 may be mounted to the housing wall 84 on the oblique mounting surface 98. With the electric motor 90 positioned on the housing wall 84 with the oblique orientation of the rotational axis 104, the distal end 116 (e.g., a portion of the motor housing 94 at the distal end 116) may be disposed radially outward of the proximal end 114 relative to the rotational axis 80 as shown, for example, in FIG. 4.

The rotor 96 includes an output shaft 100 and an output gear 102. The output gear 102 is mounted on or otherwise fixed to the output shaft 100. The output shaft 100 and the output gear 102 are rotatable about a rotational axis 104 of the electric motor 90. The rotational axis 104 may be oriented orthogonal to or substantially orthogonal to the oblique mounting surface 98. The output shaft 100 extends through the housing wall 84 along the rotational axis 104 rotationally supported by the gear box 56 (e.g., one or more bearings of the gear box 56). The output shaft 100 may be supported at its distal end by a bearing of the gear box 56 (not shown). Alternatively, the output shaft 100 may have a cantilevered configuration.

The bevel gear assembly 92 includes a shaft 106, a first gear 108, and a second gear 110. The first gear 108 and the second gear 110 are mounted on the shaft 106. The shaft 106, the first gear 108, and the second gear 110 are rotatable about a rotational axis 112 of the bevel gear assembly 92. The bevel gear assembly 92 is mounted on the gear box 56 for rotation about the rotational axis 112 (e.g., by one or more bearings of the gear box 56). The first gear 108 (e.g., a bevel gear) is engaged with (e.g., meshed with) the output gear 102. As shown in FIG. 4, the first gear 108 may be disposed axially between the output gear 70 and the electric motor 90 (e.g., aftward of the output gear 70), relative to the rotational axis 80. The first gear 108 may have a diameter which is greater than a diameter of the second gear 110. The second gear 110 is engaged with (e.g., meshed with) the output gear 70. The rotational axis 112 is oriented at an oblique angle α relative to the rotational axis 104. The oblique angle α may be between approximately five degrees (5°) and approximately thirty degrees (30°). The shaft 106 extends on and along the rotational axis 112 from the motor housing 94 toward the rotational axis 112.

The electric motor assembly 62 of the present disclosure facilitates improved packaging of the electric motor 90 within the propulsion system 20. In particular, the oblique orientation of the electric motor 90 facilitates installation and removal of the electric motor 90 (e.g., along the rotational axis 104), thereby avoiding clash with surrounding components of the engine 22, the drivetrain 26, or other components of the propulsion system 20. The oblique orientation of the electric motor 90 may additionally facilitate reduction in the gear box housing 82 size by allowing the electric motor 90 to be mounted on the gear box housing 82 at a more radiallycentered position of the gear box 56 (e.g., relative to the rotational axis 80) than would otherwise be available. The oblique orientation of the electric motor 90 may accommodate a reduced radial span of the gear box housing 56 (e.g., facilitating omission of gear box housing 56 material at the box 118 shown in FIG. 4), thereby reducing propulsion system 20 weight and facilitate greater flexibility in the propulsion system 20 (e.g., nacelle) aerodynamic design. With this arrangement, the distal end 116 (e.g., a portion of the motor housing 94 at the distal end 116) may be disposed radially outward of the housing wall 84.

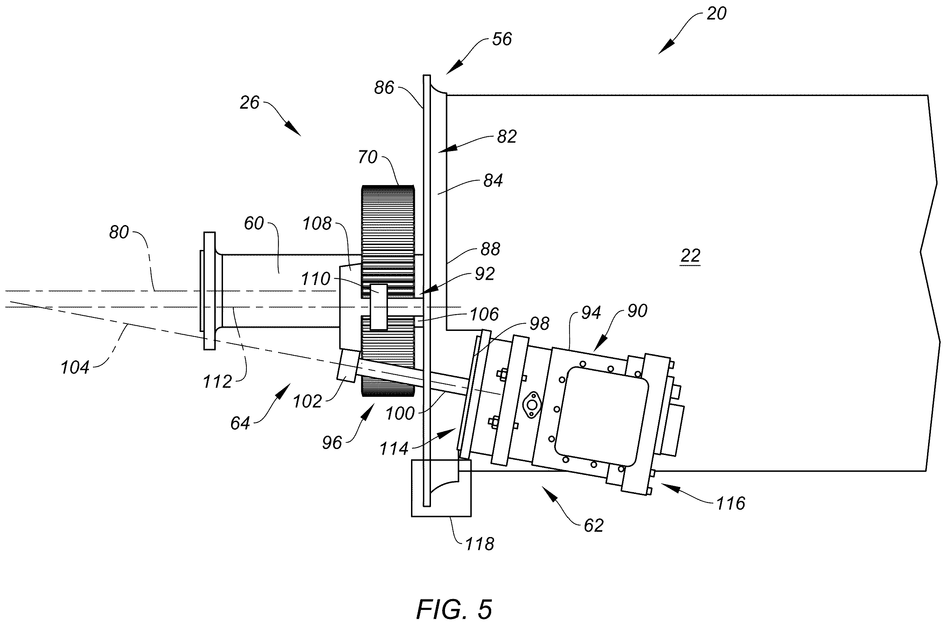

Referring to FIG. 5, in some embodiments, the first gear 108 may be disposed axially between the output gear 70 and the propulsor 24 (see FIG. 2) (e.g., forward of the output gear 70), relative to the rotational axis 80. This configuration of the bevel gear assembly 92 and its first gear 108 may allow the output gear 70 to positioned axially closer to the housing wall 84 and/or the electric motor 90, relative to the rotational axis 80, thereby facilitating a reduced axial footprint of the drivetrain 26 (e.g., relative to the bevel gear assembly 92 configuration of FIG. 4).

While the principles of the invention have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A propulsion system for an aircraft, the propulsion system comprising:
an engine including an engine output shaft;
a drivetrain coupled with the engine output shaft, wherein the drivetrain includes a propulsor output shaft, a gear assembly, and an electric motor assembly, the gear assembly includes a propulsor output gear mounted on the propulsor output shaft, the propulsor output gear and the propulsor output shaft are rotatable about a first rotational axis, and the electric motor assembly includes a bevel gear assembly and an electric motor, the bevel gear assembly is rotatable about a second rotational axis, the bevel gear assembly is engaged with the propulsor output gear, the electric motor includes a rotor rotatable about a third rotational axis, the third rotational axis is oriented at an oblique angle relative to the second rotational axis, the rotor includes an electric motor output shaft and an electric motor output gear mounted on the electric motor output shaft, and the electric motor output gear is engaged with the bevel gear assembly; and
a propulsor interconnected with the propulsor output gear by the propulsor output shaft.

2. The propulsion system of claim 1, wherein the drivetrain further includes at least one reduction gear-shaft assembly, the at least one reduction gear-shaft assembly is engaged with the propulsor output gear, and the at least one reduction gear-shaft assembly is coupled with the engine output shaft.

3. The propulsion system of claim 1 or 2, wherein the bevel gear assembly includes a bevel gear shaft, a first gear, and a second gear, the first gear and the second gear are disposed on the bevel gear shaft, the first gear is coupled with the electric motor output gear, and the second gear is coupled with the propulsor output gear.

4. The propulsion system of claim 3, wherein the first gear is disposed axially between the propulsor output gear and the electric motor, relative to the first rotational axis.

5. The propulsion system of claim 3, wherein the first gear is disposed axially between the propulsor output gear and the propulsor, relative to the first rotational axis.

6. The propulsion system of claim 1, wherein the drivetrain further includes a gear box, the gear box includes a gear box housing and the gear assembly, the gear box housing includes a housing wall disposed between the engine and the gear assembly, the housing wall extends between and to an inner side and an outer side, the inner side faces the gear assembly, and the electric motor is mounted on the outer side, and the electric motor shaft extends through the housing wall.

7. The propulsion system of any preceding claim, wherein the oblique angle is between five degrees and thirty degrees.

8. The propulsion system of any preceding claim, wherein the second rotational axis is parallel to the first rotational axis.

9. A propulsion system for an aircraft, the propulsion system comprising:
an engine including an engine output shaft; and
a drivetrain coupled with the engine output shaft, wherein the drivetrain includes a drivetrain output shaft, a gear assembly, and an electric motor assembly, the gear assembly includes a drivetrain output gear mounted on the drivetrain output shaft, the drivetrain output gear and the drivetrain output shaft are rotatable about a first rotational axis, and the electric motor assembly includes a bevel gear assembly and an electric motor, the bevel gear assembly is rotatable about a second rotational axis parallel to the first rotational axis, the bevel gear assembly is engaged with the drivetrain output gear, the electric motor includes a rotor rotatable about a third rotational axis, the third rotational axis is oriented at an oblique angle relative to the second rotational axis, the rotor includes an electric motor output shaft and an electric motor output gear is mounted on the electric motor output shaft, the electric motor output gear is engaged with the bevel gear assembly.

10. The propulsion system of claim 9, wherein the bevel gear assembly includes a bevel gear shaft, a first gear, and a second gear, the first gear and the second gear are disposed on the bevel gear shaft, the first gear is coupled with the electric motor output gear, and the second gear is coupled with the drivetrain output gear.

11. The propulsion system of any preceding claim when not dependent on claim 6, wherein the drivetrain includes a gearbox housing, the gearbox housing houses the gear assembly, and the electric motor is mounted on the gearbox housing.

12. The propulsion system of claim 11, wherein the gearbox housing forms an oblique mounting surface orthogonal to the third rotational axis, and the electric motor is mounted to the gearbox housing on the oblique mounting surface.

13. The propulsion system of claim 11 or 12, wherein the electric motor includes an electric motor housing, the electric motor housing extends between and to a proximal end and a distal end, the electric motor housing is mounted on the gearbox housing at the proximal end, and the distal end is disposed radially outward of the gearbox housing relative to the second rotational axis.

14. The propulsion system of claim 11 or 12, wherein the electric motor includes an electric motor housing, the electric motor housing extends between and to a proximal end and a distal end, the electric motor housing is mounted on the gearbox housing at the proximal end, and the distal end is disposed radially outward of the proximal end relative to the second rotational axis.
